# EUROPEAN PATENT SPECIFICATION

(11) **EP 3 824 664 B1**
(45) Date of publication and mention of the grant of the patent: **23.10.2024**
(21) Application number: 18934625.7
(22) Date of filing: 26.09.2018
(51) Int. Cl.: H04W 76/20, H04W 28/10, H04W 28/02, H04L 47/80

(54) **PRIORITY HANDLING AT QUALITY OF SERVICE FLOW RELOCATION**
PRIORITÄTSHANDHABUNG BEI EINEN DIENSTGÜTEFLUSSVERLAGERUNG
GESTION DE PRIORITÉ À LA QUALITÉ DE RELOCALISATION DE FLUX DE SERVICE

(43) Date of publication of application: 26.05.2021
(73) Proprietor: Nokia Technologies Oy, 02610 Espoo (FI)
(72) Inventor: SEBIRE, Benoist, Tokyo 106-6141 (JP); TURTINEN, Samuli, 91100 Ii (FI); WU, Chunli, Beijing 100102 (CN)
(74) Representative: Mudge, Kevin
(86) International application number: PCT/CN2018/107587
(87) International publication number: WO 2020/061806

(56) References cited:
- EP-A1- 2 587 859
- CN-A- 101 572 911
- CN-A- 104 067 580
- CN-A- 107 889 154
- NOKIA ET AL: "QoS Flow Remapping", vol. RAN WG2, no. Sanya, China; 20180416 - 20180420, 14 April 2018 (2018-04-14), XP051428613, Retrieved from the Internet <URL:http://www.3gpp.org/ftp/Meetings%5F3GPP%5FSYNC/RAN2/Docs/> [retrieved on 20180414]
- NOKIA ET AL: "New QoS Flows on the Default Bearer", vol. RAN WG2, no. Prague, Czech Republic; 20171009 - 20171013, 29 September 2017 (2017-09-29), XP051354808, Retrieved from the Internet <URL:http://www.3gpp.org/ftp/tsg_ran/WG2_RL2/TSGR2_99bis/Docs/> [retrieved on 20170929]
- MEDIATEK INC: "Some remaining issues for QoS flow remapping", vol. RAN WG2, no. Montreal, Canada; 20180702 - 20180706, 1 July 2018 (2018-07-01), XP051467003, Retrieved from the Internet <URL:http://www.3gpp.org/ftp/Meetings%5F3GPP%5FSYNC/RAN2/Docs> [retrieved on 20180701]
- MEDIATEK INC: "QoS flow remapping", vol. RAN WG2, no. Sanya, China; 20180416 - 20180420, 14 April 2018 (2018-04-14), XP051428202, Retrieved from the Internet <URL:http://www.3gpp.org/ftp/Meetings%5F3GPP%5FSYNC/RAN2/Docs/> [retrieved on 20180414]
- NOKIA ET AL: "QoS Flow Relocation", vol. RAN WG2, no. Berlin, Germany; 20170821 - 20170825, 20 August 2017 (2017-08-20), XP051317907, Retrieved from the Internet <URL:http://www.3gpp.org/ftp/Meetings_3GPP_SYNC/RAN2/Docs/> [retrieved on 20170820]

## Description

### TECHNICAL FIELD

Various example embodiments relate to wireless communications.

### BACKGROUND

After reconfiguring a terminal device (UE) with a new Quality of Service (QoS) flow to data radio bearer (DRB) mapping rule, the old data radio bearer may still contain packets from that QoS flow. In scenarios where it is not possible to schedule to two data radio bearers independently (for instance, when only one serving cell is used), said leftover packets on the old data radio bearer will be delayed. The larger the queue on the old data radio bearer and the smaller the prioritized bit rate (PBR) of the old data radio bearer, the more serious the problem. The problem is further exacerbated in New Radio (NR) due to pre-processing, which allows the terminal device to build a large number of PDUs before uplink transmission.

NOKIA ET AL: "QoS Flow Remapping", 3GPP DRAFT; R2-1804913 QOS FLOW REMAPPING, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG2, no. Sanya, China; 20180416 - 20180420 14 April 2018 (2018-04-14) discloses proposals for 1) introducing an uplink end marker for QoS flow relocation, 2) letting chipset vendors to decide whether a control PDU or header field is used to convey the end marker and 3) when remapping a QoS flow from an old bearer to a new one, either leaving-as-is, prioritizing for transmission or discarding the data from that QoS flow on the old bearer.

### BRIEF DESCRIPTION

According to an aspect, there is provided the subject matter of the independent claims. Embodiments are defined in the dependent claims.

One or more examples of implementations are set forth in more detail in the accompanying drawings and the description below. Other features will be apparent from the description and drawings, and from the claims.

### BRIEF DESCRIPTION OF DRAWINGS

In the following, example embodiments will be described in greater detail with reference to the attached drawings, in which
Figure 1 illustrates an exemplified wireless communication system;
Figures 2 to 4 illustrate exemplary processes according to embodiments; and
Figure 5 illustrates an apparatus according to embodiments.

### DETAILED DESCRIPTION OF SOME EMBODIMENTS

In the following, different exemplifying embodiments will be described using, as an example of an access architecture to which the embodiments may be applied, a radio access architecture based on long term evolution advanced (LTE Advanced, LTE-A) or new radio (NR, 5G), without restricting the embodiments to such an architecture, however. It is obvious for a person skilled in the art that the embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), wireless local area network (WLAN or WiFi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof.

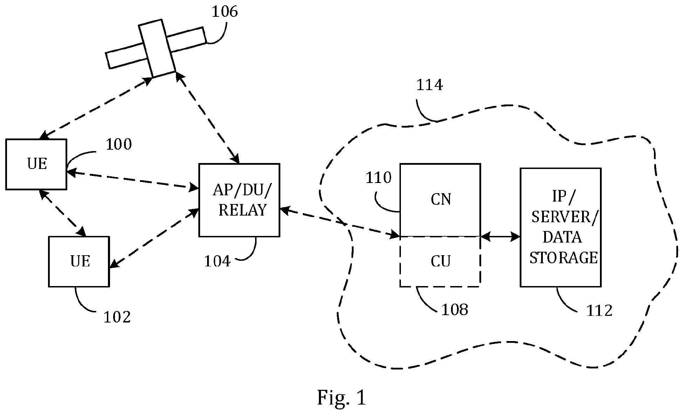

Figure 1 depicts examples of simplified system architectures only showing some elements and functional entities, all being logical units, whose implementation may differ from what is shown. The connections shown in Figure 1 are logical connections; the actual physical connections may be different. It is apparent to a person skilled in the art that the system typically comprises also other functions and structures than those shown in Figure 1.

The embodiments are not, however, restricted to the system given as an example but a person skilled in the art may apply the solution to other communication systems provided with necessary properties.

The example of Figure 1 shows a part of an exemplifying radio access network.

Figure 1 shows user devices 100 and 102 configured to be in a wireless connection on one or more communication channels in a cell with an access node (such as (e/g)NodeB) 104 providing the cell. The physical link from a user device to a (e/g)NodeB is called uplink or reverse link and the physical link from the (e/g)NodeB to the user device is called downlink or forward link. It should be appreciated that (e/g)NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used for signalling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to user devices. The antenna unit may comprise a plurality of antennas or antenna elements. The (e/g)NodeB is further connected to core network 110 (CN or next generation core NGC). Depending on the system, the counterpart on the CN side can be a serving gateway (S-GW, routing and forwarding user data packets), packet data network gateway (P-GW), for providing connectivity of user devices (UEs) to external packet data networks, or mobile management entity (MME), etc.

The user device (also called UE, user equipment, user terminal, terminal device, etc.) illustrates one type of an apparatus to which resources on the air interface are allocated and assigned, and thus any feature described herein with a user device may be implemented with a corresponding apparatus, such as a relay node. An example of such a relay node is a layer 3 relay (self-backhauling relay) towards the base station.

The user device typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-to-computer interaction. The user device (or in some embodiments a layer 3 relay node) is configured to perform one or more of user equipment functionalities. The user device may also be called a subscriber unit, mobile station, remote terminal, access terminal, user terminal or user equipment (UE) just to mention but a few names or apparatuses.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

It should be understood that, in Figure 1, user devices are depicted to include 2 antennas only for the sake of clarity. The number of reception and/or transmission antennas may naturally vary according to a current implementation.

Additionally, although the apparatuses have been depicted as single entities, different units, processors and/or memory units (not all shown in Figure 1) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications, including vehicular safety, different sensors and real-time control. 5G is expected to have multiple radio interfaces, namely below 6GHz, cmWave and mmWave, and also being integradable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 112, or utilize services provided by them. The communication network may also be able to support the usage of cloud services, for example at least part of core network operations may be carried out as a cloud service (this is depicted in Figure 1 by "cloud" 114). The communication system may also comprise a central control entity, or a like, providing facilities for networks of different operators to cooperate for example in spectrum sharing.

Edge cloud may be brought into radio access network (RAN) by utilizing network function virtualization (NVF) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit, DU 104) and non-real time functions being carried out in a centralized manner (in a centralized unit, CU 108).

It should also be understood that the distribution of labor between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilise geostationary earth orbit (GEO) satellite systems, but also low earth orbit (LEO) satellite systems, in particular mega-constellations (systems in which hundreds of (nano)satellites are deployed). Each satellite 106 in the mega-constellation may cover several satellite-enabled network entities that create on-ground cells. The on-ground cells may be created through an on-ground relay node 104 or by a gNB located on-ground or in a satellite.

It is obvious for a person skilled in the art that the depicted system is only an example of a part of a radio access system and in practice, the system may comprise a plurality of (e/g)NodeBs, the user device may have an access to a plurality of radio cells and the system may comprise also other apparatuses, such as physical layer relay nodes or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Figure 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in Figure 1). A HNB Gateway (HNB-GW), which is typically installed within an operator's network may aggregate traffic from a large number of HNBs back to a core network.

The embodiments relate to the 5G Quality of Service (QoS) model or framework. Unlike in LTE, the radio access network (RAN) in 5G controls data radio bearers (DRB) independently from the core network (CN). Specifically, the RAN decides on DRB configuration and how QoS flows are mapped to DRBs. (5G) QoS flow may be defined as the finest granularity for QoS forwarding treatment in the 5G System (CN+RAN). All traffic mapped to the same 5G QoS Flow receive the same forwarding treatment (e.g., scheduling policy, queue management policy, rate shaping policy, RLC configuration, etc.). Providing different QoS forwarding treatment, therefore, requires separate 5G QoS Flows.

The 5G QoS framework was designed with the goal of reducing of control plane signaling in mind. To achieve this, the 5G QoS framework specifies a reflective QoS (RQoS) for service data flow to QoS flow mapping, i.e., a non-access stratum (NAS) layer mapping (i.e., within CN). More importantly for the following embodiments, the 5G QoS framework specifies a reflective QoS also for QoS flow to DRB mapping, i.e., an access stratum (AS) layer mapping (i.e., within RAN). The idea of reflective QoS is that each terminal device derives uplink mapping filters and mapping rules by itself from the downlink traffic so that network signaling over the control plane is not needed. To enable the use of the reflective QoS, a QoS flow identifier (QFI) needs to be included into the downlink (data) packets, e.g., in a Service Data Adaptation Protocol (SDAP) header, where SDAP is a RAN protocol responsible for QoS Flow handling across the 5G air interface (Uu interface). Based on the QoS flow identifier, the terminal device is able to determine the QoS flow and consequently also which mapping rule to use (i.e., which data radio bearer to use for a specific QoS flow). Further, each terminal device may need to be indicated on which layer (NAS or AS) the reflective QoS is to be performed with the data packet.

Each QoS flow identifier is associated with a certain QoS profile (i.e., QoS parameters and QoS characteristics). The QoS flow identifier may be defined as a scalar that is used as a reference to a specific QoS forwarding behavior (e.g. packet loss rate, packet delay budget) to be provided to a QoS Flow. This may be implemented in the access network by the 5QI referencing node specific parameters that control the QoS forwarding treatment (e.g., scheduling weights, admission thresholds, queue management thresholds, link layer protocol configuration, etc.).

In the following, the access stratum layer mapping is discussed in more detail. In the access stratum layer mapping, the data radio bearer defines the data packet treatment on the radio interface. A given data radio bearer serves data packets with the same data packet forwarding treatment. Separate data radio bearers may be established for QoS flows requiring different data packet forwarding treatment, or several QoS Flows belonging to the same protocol data unit (PDU) session can be multiplexed in the same data radio bearer.

In reflective QoS mapping for AS layer, the terminal device monitors the QFI(s) of the downlink data packets (included, e.g., in a SDAP header) for each data radio bearer and applies the same QoS flow to data radio bearer mapping in the uplink. In other words, the terminal device maps, for each data radio bearer, the uplink data packets belonging to the QoS flows(s) corresponding to the QFI(s) and PDU Session observed in the downlink data packets for that DRB. To enable this reflective mapping, the NextGen(NG)-RAN (i.e., the access node) marks (using SDAP) downlink data packets over Uu with QFI. In addition to the reflective QoS mapping, explicit configuration of the QoS flow to DRB mapping rules may also be possible using Radio Resource Control (RRC) signaling. The terminal device may always apply the latest update of the mapping rules regardless of whether it was performed via reflecting mapping or explicit configuration.

When a QoS flow to data radio bearer mapping rule is updated, i.e., when a QoS flow is relocated from an old data radio bearer to a new data radio bearer, the terminal device may send an end marker on the old data radio bearer.

For each PDU session, a default data radio bearer may be configured. If an incoming uplink data packet matches neither an RRC configured nor a reflective mapping rule, the terminal device may then map that data packet to the default data radio bearer of the PDU session. Within each PDU session, NG-RAN may map multiple QoS flows to a DRB.

A logical channel providing by definition services for the medium access control (MAC) layer may be configured for each data radio bearer. A priority of a data radio bearer, to be discussed in connection with embodiments, may specifically be the priority of the corresponding logical channel in MAC. Similarly, the prioritized bit rate (PBR) and the logical channel prioritization (LCP) parameters to be discussed in relation to embodiments may be the prioritized bit rate and the LCP parameters of the corresponding logical channel, respectively.

After reconfiguring a terminal device with a new QoS flow to data radio bearer mapping rule, a transmission queue of the old data radio bearer may still contain data packets from the QoS flow associated with said new QoS flow to data radio bearer mapping rule. In scenarios where it is not possible to schedule two data radio bearers independently, said leftover packets on the old data radio bearer will be delayed. The larger the queue on the old data radio bearer and the smaller the prioritized bit rate of the old data radio bearer, the more serious the problem. The problem is further exacerbated in New Radio due to pre-processing, which allows the terminal device to build a large number of PDUs before uplink transmission. The embodiments provide a solution for overcoming or at least alleviating said problem.

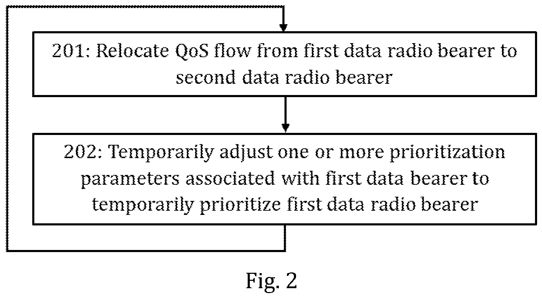

Figure 2 illustrates a process according to an embodiment for facilitating smooth QoS flow relocation (i.e., for updating a QoS flow to data radio bearer mapping without causing undue delays). The illustrated process may be performed by a terminal device of a wireless communications system or specifically any of the terminal devices 100, 102 of Figure 1. While the process is discussed in the following in terms of an access node carrying out the process, in other embodiments another network (possibly in communication with an access node) may carry out the illustrated process fully or partly.

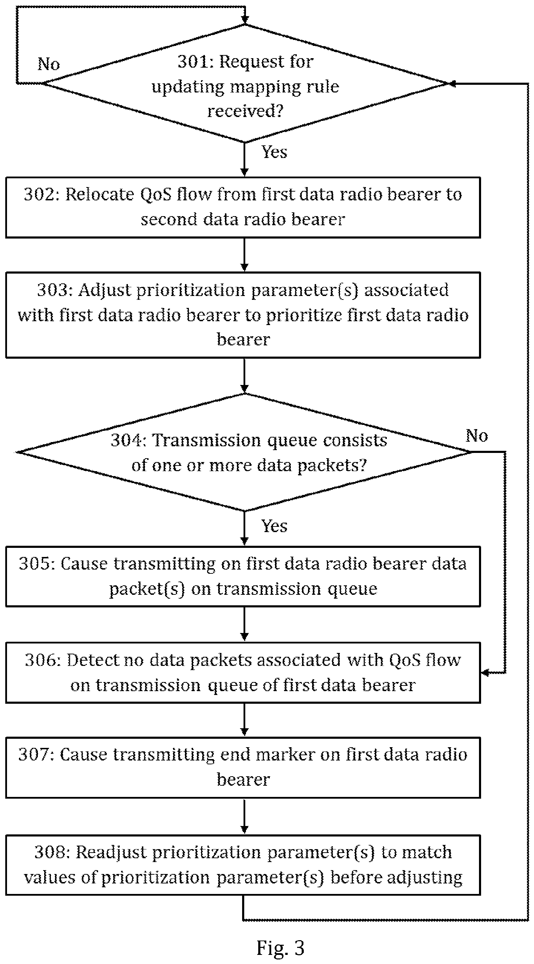

Referring to Figure 2, the terminal device relocates, in block 201, a quality of service, QoS, flow from a first data radio bearer to a second data radio bearer. In other words, a QoS flow to data radio bearer mapping rule in the terminal device is updated for said QoS flow. The second data radio bearer may have a higher priority than the first data radio bearer. In response to the relocating in block 201, the terminal device temporarily adjusts, in block 202, one or more prioritization parameters associated with the first data radio bearer to (temporarily) prioritize the first data radio bearer. The first data radio bearer may be temporarily prioritized over one or more other data radio bearers which may or may not comprise the second data radio bearer. In some embodiments, the first data radio bearer may be temporarily prioritized equally compared to the second data radio bearer. The adjustment in block 202 may be temporary in the sense that the adjustment is reversed (or cancelled) once the transmission queue of the first data radio bearer is empty of any data packets associated with the relocated QoS flow (as will be discussed in more detail in relation to Figure 3).

In some embodiments, the first data radio bearer may be a default data radio bearer of a corresponding protocol data unit (PDU) session and the second data radio bearer may be a data radio bearer associated with a tailored QoS (or QoS flow identifier or Qos profile).

In some embodiments, the terminal device may perform the temporary adjusting only if out-of-sequence delivery is not configured by a layer higher than the data link layer.

The one or more prioritization parameters may comprise one or more sets of prioritization parameters of different types, each set comprising at least one prioritization parameter. In some embodiments, the one or more prioritization parameters may comprise at least a priority of the first data radio bearer, i.e., the priority of the logical channel used for that data radio bearer. The priority may be defined, for example, to have an integer value with a pre-defined range (e.g., 1 to 256) with an increasing priority value indicating a lower or higher priority depending on the definition. The temporary adjusting of the one or more prioritization parameters in block 202, thus, may comprise at least temporarily assigning the first data radio bearer a priority assigned for the second data radio bearer (which may be assumed to correspond to higher priority than the first data radio bearer). Alternatively, the first data radio bearer may be assigned a first pre-defined value which may or may not be defined to be dependent on the priority of the second data radio bearer (e.g., a priority of 1 or a priority of two times the priority of the second data radio bearer). The first pre-defined value may be lower or higher than the priority of the second data radio bearer.

In some embodiments, the one or more prioritization parameters may comprise at least a prioritized bit rate of the first data radio bearer. In order to control how a terminal device fills the uplink grants received from the access node (i.e., gNB), a prioritized bit rate (PBR) may be configured per data radio bearer, i.e., per logical channel. The prioritized bit rate may be defined as the bit rate provided to one logical channel before allocating any resource to a lower-priority logical channel. The prioritized bit rate is used to ensure that high priority logical channels are scheduled first while avoiding the starvation of lower priority ones. In other words, the prioritized bit rate is used to guarantee that certain QoS is achieved for each data radio bearer in uplink.

In embodiments where the one or more prioritization parameters comprise at least the prioritized bit rate, the temporary adjusting of the one or more prioritization parameters in block 202 may comprise at least temporarily setting the prioritized bit rate of the first data radio bearer to a second pre-defined value. The second pre-defined value may correspond to infinity or to a finite (high) value. If the prioritized bit rate of a logical channel is set to infinity, the terminal device (i.e., the MAC entity of the terminal device) may allocate resources for all the data that is available for transmission on the logical channel before meeting the prioritized bit rate of the lower priority logical channel(s).

In some embodiments, the one or more prioritization parameters may comprise at least a pre-defined set of logical channel prioritization (LCP) parameters. In such embodiment, the temporary adjusting of the one or more prioritization parameters in block 202 may comprise at least temporarily using the pre-defined set of logical channel prioritization parameters for the first radio bearer. The pre-defined set of logical channel prioritization parameters may have been configured earlier by the radio access network (or the access node) to the terminal device and may be maintained in a database of the terminal device.

The LCP parameters may be parameters of a LCP procedure which are applied whenever a new transmission is performed. The access node may control the scheduling of uplink data by signaling (RRC signaling) for each logical channel per MAC entity (of a terminal device) one or more sets of LCP parameters. The (pre-defined set of) LCP parameters may comprise one or more of a priority (defined so that an increasing priority value indicates a lower priority level), a prioritized bit rate (as discussed above) and a bucket size duration (BSD). The bucket size duration may indicate the amount of time (e.g., in milliseconds) that it takes for a bucket size to be reached when transmitting uplink data of a logical channel using the prioritized bit rate. The bucket size may be defined as BSD × PBR indicating maximum uplink data which may be buffered. The bucket size duration is basically used to set the maximum amount of pending data allowed for a logical channel, with respect to the prioritization checks.

The (pre-defined set of) LCP parameters may further define one or more mapping restrictions for each logical channel comprising a list of allowed subcarrier spacing(s) for transmission, a maximum PUSCH duration allowed for transmission, a parameter (or a list) defining whether a Configured Grant Type 1 can be used for transmission and/or a list of allowed cell(s) for transmission.

The LCP procedure associated with the LCP parameters may be carried out as follows. Initially, the terminal device (i.e., the MAC entity of the terminal device) may initialize *Bⱼ* of the logical channel *j* (a variable of the terminal device) to zero when the logical channel is established. For each logical channel *j*, the terminal device (i.e., the MAC entity) may increment *Bⱼ* by the product PBR × *T* before every instance of the LCP procedure, where *T* is the time elapsed since *Bⱼ* was last updated. If the value of *Bⱼ* is greater than the bucket size (i.e., PBR × BSD), the terminal device (i.e., the MAC entity) may set *Bⱼ* to the bucket size.

Figure 3 illustrates another process according to an embodiment for facilitating smooth QoS flow relocation. The illustrated process may be performed by any terminal device of a wireless communications system or specifically any of the terminal devices 100, 102 of Figure 1.

Referring to Figure 3, the terminal device initially receives, in block 301, a request for updating a QoS flow to data radio bearer mapping rule from an access node. Specifically, the request may be for updating the QoS flow to data radio bearer mapping rule so as to relocate a QoS flow from a first data radio bearer (a first mapping) to a second data radio bearer (a second mapping). The proceeding block 302 may correspond to block 201 of Figure 2 and is thus not repeated here for brevity. In response to the relocating in block 302, the terminal device adjusts, in block 303, one or more prioritization parameters associated with the first data bearer to prioritize the first data radio bearer. The one or more prioritization parameters and the adjusting of the one or more prioritization parameters (i.e., to which values said one or more prioritization parameters may be adjusted) may be defined as discussed in relation to Figure 1 with the distinction that the adjusting in block 303 (by itself) is not temporary. The temporary nature of the adjusting (as mentioned in relation to block 202 of Figure 2) is implemented in this embodiment specifically according to blocks 304 to 308 as will be discussed in the following. In other words, block 202 of Figure 2 may correspond to (or comprise) blocks 303 to 308 of Figure 3 or at least some of them.

After the one or more prioritization parameters are adjusted, the terminal device may check (or determine or monitor) a status of the transmission queue of the first data bearer (i.e., at least how many data packets associated with said QoS flow are buffered). Specifically, if the transmission queue of the first data radio bearer comprises one or more data packets associated with said QoS flow in blocks 304, the terminal device causes transmitting, in block 305, on the first data radio bearer one or more data packets on the transmission queue of the first data radio bearer according to the one or more prioritization parameters (to an access node or one or more access nodes). Specifically, the terminal device may cause transmitting, in block 305, n data packets, where *n* is equal to the number of said one or more data packets. Then, the terminal device detects, in block 306, that there are no data packets associated with the QoS flow on the transmission queue of the first data bearer. In other words, the terminal device detects that the first data bearer is no longer needed for transmitting data packets associated with the QoS flow. In response to the detecting in block 306, the terminal device causes transmitting, in block 307, an end marker on the first data radio bearer to an access node according to the one or more prioritization parameters. The transmitting of the end marker in block 307 may comprise, for example, introducing (or generating or constructing) and causing transmitting a separate control PDU (an end marker control PDU).

After transmitting the end marker, the terminal device readjusts, in block 308, said one or more prioritization parameters to match values of said one or more prioritization parameters before the adjusting in block 303 (or before/at the time of the relocating in block 302). In other words, the terminal device reverts said one or more prioritization parameters for the first data radio bearer back to their original values.

It should be noted that when the terminal device operates according to the one or more prioritization parameters of the first data radio bearer, not only data packets of the QoS flow (that is, the relocated QoS flow) in the transmission queue of the first data radio bearer but also any data packets of other QoS flows in the transmission queue of the first data radio bearer may be prioritized.

If, after the adjusting in block 303, the transmission queue of the first data radio bearer comprises, in block 304, no data packets associated with said QoS flow, the terminal device directly detects, in block 306, that no data packets associated with the QoS flow exist on the transmission queue, causes transmitting, in block 307, the end marker to the access node according to the one or more prioritization parameters and readjusts, in block 308, the one or more prioritization parameters as described above.

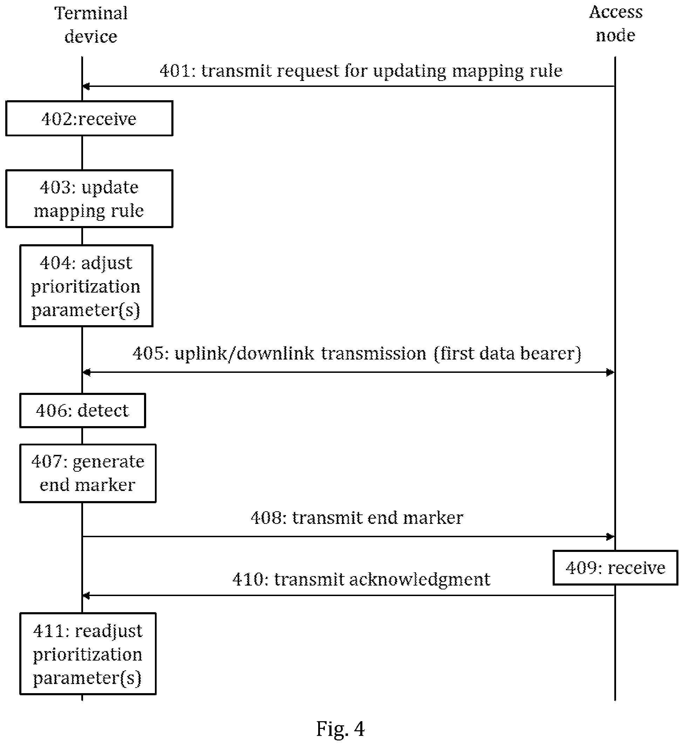

Figure 4 illustrates an alternative process according to embodiments using a signaling diagram between an access node and a terminal device for updating a QoS flow to data radio bearer mapping rule. The illustrated process may be performed by any of the terminal devices 100, 102 of Figure 1 and the access node 104 of Figure 1. In the illustrated embodiment, it is assumed that Radio Link Control Acknowledged Mode (RLC AM) is used in the terminal device and the access node. The RLC AM is conventionally used when a reliable channel is required as, in RLC AM, a positive acknowledgment is transmitted upon a reception of each transmitted PDU.

Referring to Figure 4, the access node transmits, in message 401, a request for updating a QoS flow to data radio bearer mapping rule which is subsequently received, in block 402, by the terminal device. The terminal device updates, in block 403, the corresponding mapping rule according to the received request (i.e., relocates the QoS flow from a first data radio bearer to a second data radio bearer potentially having a higher priority). The terminal device adjusts, in block 404, the one or more prioritization parameters (e.g., priority, PBR and/or LCP parameters) to prioritize the first data bearer. The terminal device may, thereafter, check the status of the transmission queue of the first data radio bearer (not shown in Figure 4). In this illustrated example, it is assumed that the transmission queue of the first data radio bearer comprises two or more data packets associated with the QoS flow.

After the one or more prioritization parameters have been adjusted in block 404, the terminal receives, in messages 405, downlink transmission from the access node and causes transmitting, also in messages 405, in uplink (according to the adjusted one or more prioritization parameters in the case of the first radio data bearer). Specifically, the terminal device monitors downlink data packets for QoS flow identifiers, selects a data radio bearer for uplink based on the QoS flow defined in the QoS flow identifier and QoS flow to data radio bearer mapping rules and causes transmitting uplink data packets on the selected data radio bearer (i.e., on the first radio data bearer, on the second radio data bearer and/or on other radio data bearers). For example, the second data radio bearer is selected based on the updated mapping rule for uplink transmission if the QoS flow identifier identifies the relocated QoS flow. Further, the terminal device also causes transmitting, in messages 405, any buffered data packets (which may or may not be associated with the relocated QoS flow) in a transmission queue of the first data bearer.

As described in relation to Figure 3, the terminal device detects, in block 406, that no packets associated with the (relocated) QoS flow exist in a transmission queue of the first data bearer and consequently generates, in block 407, a control PDU corresponding to an end marker (i.e., an end marker control PDU) and causes transmitting, in message 408, the end marker control PDU to the access node. The access node receives, in block 409, the end marker control PDU and consequently causes transmitting, in message 410, an acknowledgment acknowledging the successful reception of the end marker. Only in response to receiving the acknowledgment in block 411, the terminal device readjusts, in block 412, said one or more prioritization parameters to match values of said one or more prioritization parameters before the adjusting in block 404.

In some alternative embodiments, the acknowledgment in message 410 may not be enough to trigger the readjusting in block 411. Instead, the terminal device may perform the readjusting only if also an acknowledgment for receiving a PDU (or a service data unit, SDU) directly preceding the end marker (end marker control PDU) is received. In yet another embodiment, the terminal device may perform the readjusting only if acknowledgments for the end marker and for one or more PDUs or SDUs directly preceding the end marker (end marker control PDU) are received.

In some embodiments, the Radio Link Control Unacknowledged Mode (RLC UM) may be used, instead of the RLC AM. In such embodiments, the readjusting of the one or more prioritization parameters may be performed in response to the transmitting of the end marker on the first radio data bearer (i.e., in response to the end marker being included in an uplink PDU to be sent to an access node).

The blocks, related functions, and information exchanges described above by means of Figures 2, 3 and 4 in no absolute chronological order, and some of them may be performed simultaneously or in an order differing from the given one. Other functions can also be executed between them or within them, and other information may be sent and/or received, and/or other mapping rules applied. Some of the blocks or part of the blocks or one or more pieces of information can also be left out or replaced by a corresponding block or part of the block or one or more pieces of information. For example, an alternative embodiment may comprise only blocks 302 to 308 of Figure 3.

The techniques and methods described herein may be implemented by various means so that an apparatus/device configured to temporarily prioritize transmission on the first (old) data radio bearer based on at least partly on what is disclosed above with any of Figures 2, 3 and 4, including implementing one or more functions/operations of a corresponding terminal device or access node (or network element) described above with an embodiment/example, for example by means of any of Figures 2, 3 and 4. Further, the implementation may comprise separate means for each separate function/operation, or means may be configured to perform two or more functions/operations.

For example, one or more of the means described above may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, logic gates, decoder circuitries, encoder circuitries, other electronic units designed to perform the functions described herein by means of Figures 2, 3 and 4, or a combination thereof. For firmware or software, the implementation can be carried out through modules of at least one chipset (e.g., procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components described herein may be rearranged and/or complemented by additional components in order to facilitate the achievements of the various aspects, etc., described with regard thereto, and they are not limited to the precise configurations set forth in the given figures, as will be appreciated by one skilled in the art.

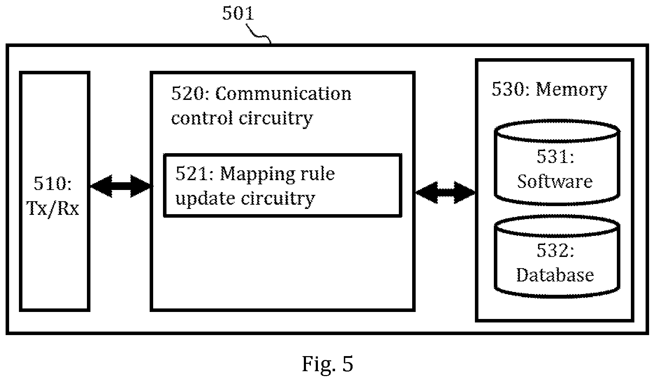

Figure 5 provides a terminal device or other network node or network element (apparatus, device) according to some embodiments. Figure 5 may illustrate a terminal device configured to carry out at least the functions described above in connection with prioritizing an old (first) data radio bearer in response to a relocation of a QoS flow. Each terminal device may comprise one or more communication control circuitry 520, such as at least one processor, and at least one memory 530, including one or more algorithms 531, such as a computer program code (software) wherein the at least one memory and the computer program code (software) are configured, with the at least one processor, to cause, respectively, the terminal device to carry out any one of the exemplified functionalities of the terminal device described above.

Referring to Figure 5, the communication control circuitry 521 of the access node 501 comprises at least mapping rule update circuitry 521. The mapping rule update circuitry 521 may be configured to relocate a QoS flow from one data radio bearer to another (i.e., to update a QoS flow to data radio bearer mapping rule) and to temporarily adjust (i.e., increase) prioritization for the old data radio bearer and, to this end, to carry out at least some of the functionalities described above by means of any of Figures 2, 3 and 4 using one or more individual circuitries.

Referring to Figure 5, the memory 530 may be implemented using any suitable data storage technology, such as semiconductor based memory devices, flash memory, magnetic memory devices and systems, optical memory devices and systems, fixed memory and removable memory.

Referring to Figure 5, the access node or the terminal device may further comprise different interfaces 510 such as one or more communication interfaces (TX/RX) comprising hardware and/or software for realizing communication connectivity over the medium according to one or more communication protocols. The communication interface 510 for a terminal device may provide the terminal device with communication capabilities to communicate in the cellular communication system and enable communication between user devices (terminal devices) and to different network nodes or elements (e.g., to one or more access nodes). The communication interface may comprise standard well-known components such as an amplifier, filter, frequency-converter, (de)modulator, and encoder/decoder circuitries, controlled by the corresponding controlling units, and one or more antennas. The terminal device may also comprise different user interfaces.

As used in this application, the term 'circuitry' may refer to one or more or all of the following: (a) hardware-only circuit implementations, such as implementations in only analog and/or digital circuitry, and (b) combinations of hardware circuits and software (and/or firmware), such as (as applicable): (i) a combination of analog and/or digital hardware circuit(s) with software/firmware and (ii) any portions of hardware processor(s) with software, including digital signal processor(s), software, and memory(ies) that work together to cause an apparatus, such as a terminal device or an access node, to perform various functions, and (c) hardware circuit(s) and processor(s), such as a microprocessor(s) or a portion of a microprocessor(s), that requires software (e.g. firmware) for operation, but the software may not be present when it is not needed for operation. This definition of 'circuitry' applies to all uses of this term in this application, including any claims. As a further example, as used in this application, the term 'circuitry' also covers an implementation of merely a hardware circuit or processor (or multiple processors) or a portion of a hardware circuit or processor and its (or their) accompanying software and/or firmware. The term 'circuitry' also covers, for example and if applicable to the particular claim element, a baseband integrated circuit for an access node or a terminal device or other computing or network device.

In embodiments, the at least one processor, the memory, and the computer program code form processing means or comprises one or more computer program code portions for carrying out one or more operations according to any one of the embodiments of Figures 2, 3 and 4 or operations thereof.

Embodiments as described may also be carried out in the form of a computer process defined by a computer program or portions thereof. Embodiments of the methods described in connection with Figures 2, 3 and 4 may be carried out by executing at least one portion of a computer program comprising corresponding instructions. The computer program may be provided as a computer readable medium comprising program instructions stored thereon or as a non-transitory computer readable medium comprising program instructions stored thereon. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. Coding of software for carrying out the embodiments as shown and described is well within the scope of a person of ordinary skill in the art.

Even though the invention has been described above with reference to examples according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. A terminal device (100, 102) comprising:
means for, in response to relocating (201) a quality of service, QoS, flow from a first data radio bearer to a second data radio bearer, temporarily adjusting (202) one or more prioritization parameters associated with the first data radio bearer to prioritize the first data radio bearer, wherein the one or more prioritization parameters comprise at least one of a priority of the first data radio bearer, a prioritized bit rate of the first data radio bearer or a pre-defined set of logical channel prioritization, LCP, parameters for carrying out an LCP procedure.

2. The terminal device (100, 102) according to claim 1, wherein the adjusting (202) of the one or more prioritization parameters comprises:
adjusting (303, 404) the one or more prioritization parameters associated with the first data radio bearer to prioritize the first data radio bearer;
in response to a transmission queue of the first data radio bearer comprising one or more data packets associated with the QoS flow (304), causing (305, 405) transmitting on the first data radio bearer the one or more data packets on the transmission queue according to the one or more prioritization parameters; and
in response to detecting (304, 306, 406) no data packets associated with the QoS flow exist on the transmission queue of the first data radio bearer, causing (307, 408) transmitting an end marker on the first data radio bearer to an access node according to the one or more prioritization parameters and readjusting (308, 411) the one or more prioritization parameters to match values of the one or more prioritization parameters before the adjusting (202, 303, 404) of the one or more prioritization parameters.

3. The terminal device (100, 102) according to claim 2, wherein the causing (307, 408) of the transmitting of the end marker comprises generating a control protocol data unit, PDU, corresponding to the end marker and causing transmitting the control PDU.

4. The terminal device (100, 102) according to any of claims 2 to 3, wherein Radio Link Control Acknowledged Mode, RLC AM, is used in the terminal device (100, 102) and the readjusting (308, 411) of the one or more prioritization parameters is performed in response to receiving from the access node an acknowledgment for the end marker, an acknowledgment for a protocol data unit, PDU, or a service data unit, SDU, directly preceding the end marker or acknowledgments for the end marker and for one or more PDUs or SDUs directly preceding the end marker.

5. The terminal device (100, 102) according to any of claims 2 to 3, wherein Radio Link Control Unacknowledged Mode, RLC UM, is used in the terminal device (100, 102) and the readjusting (308, 411) of the one or more prioritization parameters is performed in response to the causing (307, 408) transmitting of the end marker on the first data radio bearer.

6. The terminal device (100, 102) according to any preceding claim, wherein the one or more prioritization parameters comprise at least the priority of the first data radio bearer and the adjusting of the one or more prioritization parameters comprises at least assigning the first data radio bearer a priority assigned for the second data radio bearer or a first pre-defined value.

7. The terminal device (100, 102) according to any preceding claim wherein the one or more prioritization parameters comprise at least the prioritized bit rate of the first data radio bearer and the adjusting of the one or more prioritization parameters comprises at least setting the prioritized bit rate of the first data radio bearer to a second pre-defined value.

8. The terminal device (100, 102) according to claim 7, wherein the second pre-defined value corresponds to infinity.

9. The terminal device (100, 102) according to any preceding claim wherein the one or more prioritization parameters comprise at least the pre-defined set of LCP parameters and the adjusting of the one or more prioritization parameters comprises at least using the pre-defined set of logical channel prioritization parameters for the first data radio bearer.

10. The terminal device (100, 102) according to any preceding claim, wherein the relocating (201) of the QoS flow is performed in response to receiving from an access node (104) a request for updating a mapping rule from a mapping of the QoS flow to the first data radio bearer to a mapping of the QoS flow to the second data radio bearer.

11. The terminal device (101, 102) according to any preceding claim, wherein the adjusting (202) of the one or more prioritization parameters is performed only if out-of-sequence delivery is not configured by a layer higher than a data link layer.

12. The terminal device (100, 102) according to any preceding claim, wherein the first data radio bearer is a default data radio bearer of a corresponding protocol data unit, PDU, session and the second data radio bearer is a data radio bearer associated with a tailored QoS.

13. The terminal device according to any preceding claim, wherein the adjusting of the one or more prioritization parameters is performed only if the second data radio bearer has a higher priority than the first data radio bearer before the adjusting.

14. A method comprising:
in response to relocating (201) a quality of service, QoS, flow from a first data radio bearer to a second data radio bearer, temporarily adjusting (202) one or more prioritization parameters associated with the first data bearer to prioritize the first data radio bearer, wherein the one or more prioritization parameters comprise at least one of a priority of the first data radio bearer, a prioritized bit rate of the first data radio bearer or a pre-defined set of logical channel prioritization, LCP, parameters for carrying out an LCP procedure.

15. A computer readable medium comprising program instructions which, when executed by a computer, cause an apparatus to perform at least the following:
in response to relocating (201) a quality of service, QoS, flow from a first data radio bearer to a second data radio bearer, temporarily adjusting (202) one or more prioritization parameters associated with the first data bearer to prioritize the first data radio bearer, wherein the one or more prioritization parameters comprise at least one of a priority of the first data radio bearer, a prioritized bit rate of the first data radio bearer or a pre-defined set of logical channel prioritization, LCP, parameters for carrying out an LCP procedure.

## Patentansprüche

1. Endgerätevorrichtung (100, 102), die Folgendes umfasst:
in Reaktion auf das Verlegen (201) eines Dienstqualitäts(QoS)-Stroms von einem ersten Datenfunkträger zu einem zweiten Datenfunkträger Mittel zum temporären Anpassen (202) von einem oder mehreren Priorisierungsparametern, die mit dem ersten Datenfunkträger verknüpft sind, um den ersten Datenfunkträger zu priorisieren, wobei der eine oder die mehreren Priorisierungsparameter mindestens eines von einer Priorität des ersten Datenfunkträgers, einer priorisierten Bitrate des ersten Datenfunkträgers oder eines vordefinierten Satzes von logischen Kanalpriorisierungs(LCP)-Parametern zum Umsetzen einer LCP-Prozedur umfassen.

2. Endgerätevorrichtung (100, 102) nach Anspruch 1, wobei das Anpassen (202) des einen oder der mehreren Priorisierungsparameter Folgendes umfasst:
Anpassen (303, 404) des einen oder der mehreren Priorisierungsparameter, die mit dem ersten Datenfunkträger verknüpft sind, um den ersten Datenfunkträger zu priorisieren;
in Reaktion auf eine Übertragungswarteschlange des ersten Datenfunkträgers, die ein oder mehrere Datenpakete umfasst, die mit dem QoS-Strom (304) verknüpft sind, Veranlassen (305, 405) des Übertragens des einen oder der mehreren Datenpakete in der Übertragungswarteschlange gemäß dem einen oder den mehreren Priorisierungsparametern auf dem ersten Datenfunkträger und
in Reaktion auf das Detektieren (304, 306, 406), dass keine Datenpakete, die mit dem QoS-Strom verknüpft sind, in der Übertragungswarteschlange des ersten Datenfunkträgers existieren, Veranlassen (307, 408) des Übertragens eines Endmarkers gemäß dem einen oder den mehreren Priorisierungsparametern auf dem ersten Datenfunkträger zu einem Zugangsknoten und erneutes Anpassen (308, 411) des einen oder der mehreren Priorisierungsparameter, um Werte des einen oder der mehreren Priorisierungsparameter vor dem Anpassen (202, 303, 404) des einen oder der mehreren Priorisierungsparameter abzugleichen.

3. Endgerätevorrichtung (100, 102) nach Anspruch 2, wobei das Veranlassen (307, 408) des Übertragens des Endmarkers das Erzeugen einer Steuerprotokolldateneinheit, PDU, die dem Endmarker entspricht, und das Veranlassen des Übertragens der Steuer-PDU umfasst.

4. Endgerätevorrichtung (100, 102) nach einem der Ansprüche 2 bis 3, wobei in der Endgerätevorrichtung (100, 102) ein bestätigter Funkverbindungssteuermodus, RLC AM, verwendet wird und das erneute Anpassen (308, 411) des einen oder der mehreren Priorisierungsparameter in Reaktion auf das Empfangen einer Bestätigung für den Endmarker, einer Bestätigung für eine Protokolldateneinheit, PDU, oder einer Dienstdateneinheit, SDU, die dem Endmarker direkt vorausgehen, oder von Bestätigungen für den Endmarker und für eine oder mehrere PDUs oder SDUs, die dem Endmarker direkt vorausgehen, vom Zugangsknoten durchgeführt wird.

5. Endgerätevorrichtung (100, 102) nach einem der Ansprüche 2 bis 3, wobei in der Endgerätevorrichtung (100, 102) ein nicht bestätigter Funkverbindungssteuermodus, RLC UM, verwendet wird und das erneute Anpassen (308, 411) des einen oder der mehreren Priorisierungsparameter in Reaktion auf das Veranlassen (307, 408) des Übertragens des Endmarkers auf dem ersten Datenfunkträger durchgeführt wird.

6. Endgerätevorrichtung (100, 102) nach einem der vorhergehenden Ansprüche, wobei der eine oder die mehreren Priorisierungsparameter mindestens die Priorität des ersten Datenfunkträgers umfassen und das Anpassen des einen oder der mehreren Priorisierungsparameter mindestens das Zuweisen einer Priorität, die dem zweiten Datenfunkträger zugewiesen ist, oder eines ersten vordefinierten Wertes zum ersten Datenfunkträger umfasst.

7. Endgerätevorrichtung (100, 102) nach einem der vorhergehenden Ansprüche, wobei der eine oder die mehreren Priorisierungsparameter mindestens die priorisierte Bitrate des ersten Datenfunkträgers umfassen und das Anpassen des einen oder der mehreren Priorisierungsparameter mindestens das Einstellen der priorisierten Bitrate des ersten Datenfunkträgers auf einen zweiten vordefinierten Wert umfasst.

8. Endgerätevorrichtung (100, 102) nach Anspruch 7, wobei der zweite vordefinierte Wert der Ewigkeit entspricht.

9. Endgerätevorrichtung (100, 102) nach einem der vorhergehenden Ansprüche, wobei der eine oder die mehreren Priorisierungsparameter mindestens den vordefinierten Satz von LCP-Parametern umfassen und das Anpassen des einen oder der mehreren Priorisierungsparameter mindestens das Verwenden des vordefinierten Satzes von logischen Kanalpriorisierungsparametern für den ersten Datenfunkträger umfasst.

10. Endgerätevorrichtung (100, 102) nach einem der vorhergehenden Ansprüche, wobei das Verlegen (201) des QoS-Stroms in Reaktion auf das Empfangen einer Anforderung zur Aktualisierung einer Zuordnungsregel von einer Zuordnung des QoS-Stroms zum ersten Datenfunkträger in eine Zuordnung des QoS-Stroms zum zweiten Datenfunkträger von einem Zugangsknoten (104) durchgeführt wird.

11. Endgerätevorrichtung (101, 102) nach einem der vorhergehenden Ansprüche, wobei das Anpassen (202) des einen oder der mehreren Priorisierungsparameter nur durchgeführt wird, wenn durch eine höhere Schicht als eine Datenverbindungsschicht keine Lieferung außerhalb der Sequenz ausgelegt ist.

12. Endgerätevorrichtung (100, 102) nach einem der vorhergehenden Ansprüche, wobei der erste Datenfunkträger ein standardmäßiger Datenfunkträger einer entsprechenden Protokolldateneinheits(PDU)-Sitzung ist und der zweite Datenfunkträger ein Datenfunkträger ist, der mit einer maßgeschneiderten QoS verknüpft ist.

13. Endgerätevorrichtung nach einem der vorhergehenden Ansprüche, wobei das Anpassen des einen oder der mehreren Priorisierungsparameter nur durchgeführt wird, wenn der zweite Datenfunkträger vor dem Anpassen eine höhere Priorität hat als der erste Datenfunkträger.

14. Verfahren, das Folgendes umfasst:
in Reaktion auf das Verlegen (201) eines Dienstqualitäts(QoS)-Stroms von einem ersten Datenfunkträger zu einem zweiten Datenfunkträger temporäres Anpassen (202) von einem oder mehreren Priorisierungsparametern, die mit dem ersten Datenträger verknüpft sind, um den ersten Datenfunkträger zu priorisieren, wobei der eine oder die mehreren Priorisierungsparameter mindestens eines von einer Priorität des ersten Datenfunkträgers, einer priorisierten Bitrate des ersten Datenfunkträgers oder eines vordefinierten Satzes von logischen Kanalpriorisierungs(LCP)-Parametern zum Umsetzen einer LCP-Prozedur umfassen.

15. Computerlesbares Medium, das Programmanweisungen umfasst, die, wenn sie von einem Computer ausgeführt werden, eine Einrichtung veranlassen, mindestens Folgendes durchzuführen:
in Reaktion auf das Verlegen (201) eines Dienstqualitäts(QoS)-Stroms von einem ersten Datenfunkträger zu einem zweiten Datenfunkträger temporäres Anpassen (202) von einem oder mehreren Priorisierungsparametern, die mit dem ersten Datenträger verknüpft sind, um den ersten Datenfunkträger zu priorisieren, wobei der eine oder die mehreren Priorisierungsparameter mindestens eines von einer Priorität des ersten Datenfunkträgers, einer priorisierten Bitrate des ersten Datenfunkträgers oder eines vordefinierten Satzes von logischen Kanalpriorisierungs(LCP)-Parametern zum Umsetzen einer LCP-Prozedur umfassen.

## Revendications

1. Dispositif terminal (100, 102) comprenant :
des moyens pour, en réponse à la relocalisation (201) d'un flux de qualité de service, QoS, d'un premier support radio de données à un deuxième support radio de données, ajuster temporairement (202) un ou plusieurs paramètres de hiérarchisation associés au premier support radio de données pour prioriser le premier support radio de données, dans lequel les un ou plusieurs paramètres de hiérarchisation comprennent au moins un parmi une priorité du premier support radio de données, un débit binaire prioritaire du premier support radio de données ou un ensemble prédéfini de paramètres de hiérarchisation de canal logique, LCP, pour réaliser une procédure LCP.

2. Dispositif terminal (100, 102) selon la revendication 1, dans lequel l'ajustement (202) des un ou plusieurs paramètres de hiérarchisation comprend :
l'ajustement (303, 404) des un ou plusieurs paramètres de hiérarchisation associés au premier support radio de données pour prioriser le premier support radio de données ;
en réponse à une file d'attente de transmission du premier support radio de données comprenant un ou plusieurs paquets de données associés au flux QoS (304), la provocation (305, 405) de la transmission sur le premier support radio de données des un ou plusieurs paquets de données dans la file d'attente de transmission selon les un ou plusieurs paramètres de hiérarchisation ; et
en réponse à la non détection (304, 306, 406) de paquets de données associés au flux QoS dans la file d'attente de transmission du premier support radio de données, la provocation (307, 408) de la transmission d'un marqueur de fin sur le premier support radio de données à un noeud d'accès selon les un ou plusieurs paramètres de hiérarchisation, et le réajustement (308, 411) des un ou plusieurs paramètres de hiérarchisation pour faire concorder les valeurs des un ou plusieurs paramètres de hiérarchisation avant l'ajustement (202, 303, 404) des un ou plusieurs paramètres de hiérarchisation.

3. Dispositif terminal (100, 102) selon la revendication 2, dans lequel la provocation (307, 408) de la transmission du marqueur de fin comprend la génération d'une unité de données de protocole, PDU, de commande correspondant au marqueur de fin, et la provocation de la transmission de la PDU de commande.

4. Dispositif terminal (100, 102) selon l'une des revendications 2 et 3, dans lequel un mode de commande de liaison radio avec accusé de réception, RLC AM, est utilisé dans le dispositif terminal (100, 102), et le réajustement (308, 411) des un ou plusieurs paramètres de hiérarchisation est réalisé en réponse à la réception, du noeud d'accès, d'un accusé de réception du marqueur de fin, d'un accusé de réception d'une unité de données de protocole, PDU, ou d'une unité de données de service, SDU, précédant directement le marqueur de fin, ou d'accusés de réception du marqueur de fin et d'une ou plusieurs PDU ou SDU précédant directement le marqueur de fin.

5. Dispositif terminal (100, 102) selon l'une des revendications 2 et 3, dans lequel un mode de commande de liaison radio sans accusé de réception, RLC UM, est utilisé dans le dispositif terminal (100, 102), et le réajustement (308, 411) des un ou plusieurs paramètres de hiérarchisation est réalisé en réponse à la provocation (307, 408) de la transmission du marqueur de fin sur le premier support radio de données.

6. Dispositif terminal (100, 102) selon l'une des revendications précédentes, dans lequel les un ou plusieurs paramètres de hiérarchisation comprennent au moins la priorité du premier support radio de données, et l'ajustement des un ou plusieurs paramètres de hiérarchisation comprend au moins l'attribution au premier support radio de données de la priorité attribuée pour le deuxième support radio de données ou d'une première valeur prédéfinie.

7. Dispositif terminal (100, 102) selon l'une des revendications précédentes, dans lequel les un ou plusieurs paramètres de hiérarchisation comprennent au moins le débit binaire prioritaire du premier support radio de données, et l'ajustement des un ou plusieurs paramètres de hiérarchisation comprend au moins le réglage du débit binaire prioritaire du premier support radio de données à une deuxième valeur prédéfinie.

8. Dispositif terminal (100, 102) selon la revendication 7, dans lequel la deuxième valeur prédéfinie correspond à l'infini.

9. Dispositif terminal (100, 102) selon l'une des revendications précédentes, dans lequel les un ou plusieurs paramètres de hiérarchisation comprennent au moins l'ensemble prédéfini de paramètres LCP, et l'ajustement des un ou plusieurs paramètres de hiérarchisation comprend au moins l'utilisation de l'ensemble prédéfini de paramètres de hiérarchisation de canal logique pour le premier support radio de données.

10. Dispositif terminal (100, 102) selon l'une des revendications précédentes, dans lequel la relocalisation (201) du flux QoS est réalisée en réponse à la réception, d'un noeud d'accès (104), d'une demande de mise à jour d'une règle de mappage d'un mappage du flux QoS au premier support radio de données à un mappage du flux QoS au deuxième support radio de données.

11. Dispositif terminal (101, 102) selon l'une des revendications précédentes, dans lequel l'ajustement (202) des un ou plusieurs paramètres de hiérarchisation n'est réalisé que si la distribution hors séquence n'est pas configurée par une couche supérieure à une couche de liaison de données.

12. Dispositif terminal (100, 102) selon l'une des revendications précédentes, dans lequel le premier support radio de données est un support radio de données par défaut d'une session d'unité de données de protocole, PDU, correspondante, et le deuxième support radio de données est un support radio de données associé à une QoS adaptée.

13. Dispositif terminal selon l'une des revendications précédentes, dans lequel l'ajustement des un ou plusieurs paramètres de hiérarchisation n'est réalisé que si le deuxième support radio de données a une priorité plus élevée que le premier support radio de données avant l'ajustement.

14. Procédé comprenant :
en réponse à la relocalisation (201) d'un flux de qualité de service, QoS, d'un premier support radio de données à un deuxième support radio de données, ajuster temporairement (202) un ou plusieurs paramètres de hiérarchisation associés au premier support de données pour prioriser le premier support radio de données, dans lequel les un ou plusieurs paramètres de hiérarchisation comprennent au moins un parmi une priorité du premier support radio de données, un débit binaire prioritaire du premier support radio de données ou un ensemble prédéfini de paramètres de hiérarchisation de canal logique, LCP, pour réaliser une procédure LCP.

15. Support lisible par ordinateur comprenant des instructions de programme qui, lorsqu'elles sont exécutées par un ordinateur, amènent un appareil à réaliser au moins ce qui suit :
en réponse à la relocalisation (201) d'un flux de qualité de service, QoS, d'un premier support radio de données à un deuxième support radio de données, ajuster temporairement (202) un ou plusieurs paramètres de hiérarchisation associés au premier support de données pour prioriser le premier support radio de données, dans lequel les un ou plusieurs paramètres de hiérarchisation comprennent au moins un parmi une priorité du premier support radio de données, un débit binaire prioritaire du premier support radio de données ou un ensemble prédéfini de paramètres de hiérarchisation de canal logique, LCP, pour réaliser une procédure LCP.
